(19) **Europäisches Patentamt**

**European Patent Office**

**Office européen des brevets**

(11) **EP 1 301 044 B1**

(12) **EUROPEAN PATENT SPECIFICATION**

(45) Date of publication and mention
of the grant of the patent:
**24.05.2006 Bulletin 2006/21**

(51) Int Cl.:
*H04N 7/68* (2006.01)

(21) Application number: **01308524.6**

(22) Date of filing: **05.10.2001**

(54) **Method and apparatus for compensating for motion vector errors in image data**

Verfahren und Vorrichtung zur Kompensation von fehlerhaften Bewegungsvektoren in Bilddaten

Procédé et dispositif de compensation d'erreur des vecteurs mouvement dans des données d'image

(84) Designated Contracting States:
**DE FR GB**

(43) Date of publication of application:
**09.04.2003 Bulletin 2003/15**

(60) Divisional application:
**06075130.2**

(73) Proprietors:
• **Mitsubishi Electric Information Technology Centre**
**Europe B.V.**
**Guildford GU2 7YD (GB)**
Designated Contracting States:
**GB**
• **MITSUBISHI DENKI KABUSHIKI KAISHA**
**Chiyoda-ku**
**Tokyo 100-8310 (JP)**
Designated Contracting States:
**DE FR**

(72) Inventors:
• **Ghanbari, Soroush**
**Stocton Close,**
**Guildford GU1 1HS (GB)**

• **Bober, Miroslaw**
**Guildford GU1 2SE (GB)**

(74) Representative: **Burke, Steven David et al**
**R.G.C. Jenkins & Co.**
**26 Caxton Street**
**London SW1H 0RJ (GB)**

(56) References cited:
**EP-A- 0 645 933**     **EP-A- 0 727 910**
**US-A- 5 724 369**     **US-A- 5 737 022**

• HASKELL P ET AL: "Resynchronization of motion compensated video affected by ATM cell loss" DIGITAL SIGNAL PROCESSING 2, ESTIMATION, VLSI. SAN FRANCISCO, MAR. 23 - 26, 1992, PROCEEDINGS OF THE INTERNATIONAL CONFERENCE ON ACOUSTICS, SPEECH AND SIGNAL PROCESSING (ICASSP), NEW YORK, IEEE, US, vol. 5 CONF. 17, 23 March 1992 (1992-03-23), pages 545-548, XP010058890 ISBN: 0-7803-0532-9
• WANG Y ET AL: "ERROR CONTROL AND CONCEALMENT FOR VIDEO COMMUNICATION: A REVIEW" PROCEEDINGS OF THE IEEE, IEEE. NEW YORK, US, vol. 86, no. 5, May 2000 (2000-05), pages 974-997, XP000933873 ISSN: 0018-9219

**Description**

The invention relates to a method and apparatus for processing image data. The invention relates especially to a method of processing image data to compensate for errors occurring, for example, as a result of transmission. The invention is particularly concerned with errors in motion vectors.

Image data, especially compressed video bitstreams, are very sensitive to errors. For example, a single bit error in a coded video bitstream can result in serious degradation in the displayed picture quality. Error correction schemes are known and widely used, but they are not always successful. When errors, for example, bit errors occurring during transmission, cannot be fully corrected by an error correction scheme, it is known to use error detection and concealment to conceal the corruption of the image caused by the error.

Known types of error concealment algorithms fall generally into two classes: spatial concealment and temporal concealment. In spatial concealment, missing data are reconstructed using neighbouring spatial information while in temporal concealment they are reconstructed using data in previous frames.

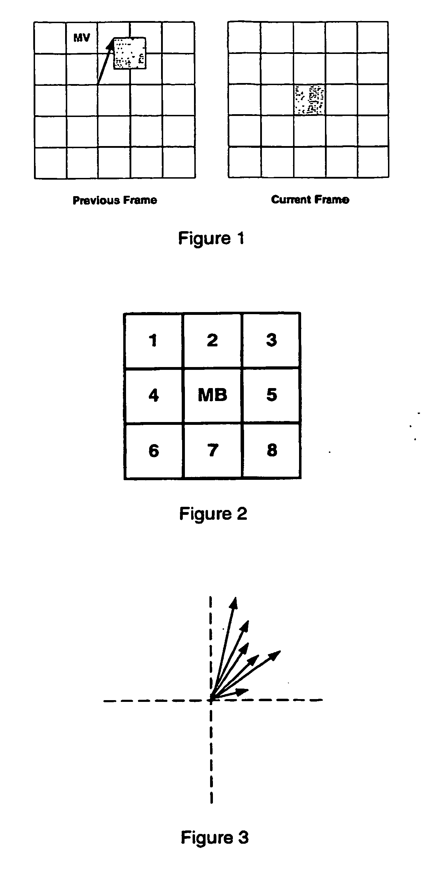

One known method of performing temporal concealment by exploiting the temporal correlation in video signals is to replace a damaged macroblock (MB) by the spatially corresponding MB in the previous frame, as disclosed in US 5,910,827. This method is referred to as the copying algorithm. Although this method is simple to implement, it can produce bad concealment in areas where motion is present. Significant improvement can be obtained by replacing a damaged MB with a motion-compensated block from the previous frame. Fig. 1 illustrates this technique. However, in order to do this successfully, the motion vector is required, and the motion vector may not be available if the macroblock data has been corrupted.

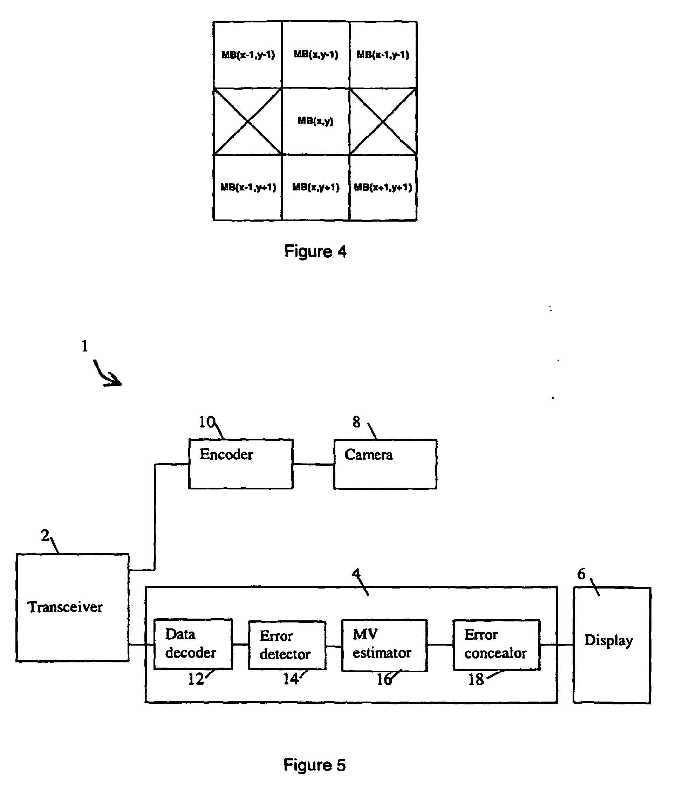

Fig. 2 shows a central MB with its 8 neighbouring blocks. When a motion vector is lost, it can be estimated from the motion vectors of neighbouring MBs. That is because normally the motion vectors of the MBs neighbouring a central MB as shown in Fig. 2 are correlated to some extent to the central MB, because neighbouring MBs in an image often move in a similar manner. Fig. 3 illustrates motion vectors for neighbouring MBs pointing in a similar direction. US 5,724,369 and US 5,737,022 relate to methods where damaged motion vectors are replaced by a motion vector from a neighbouring block. It is known to derive an estimate of the motion vector for the central MB from average (ie mean or median) of the motion vectors of neighbouring blocks, as disclosed in US 5,912,707. When a given MB is damaged, it is likely that the horizontally adjacent MBs are also damaged, as illustrated in Fig. 4. Thus, those motion vectors may be omitted from the averaging calculation.

Generally speaking, the median is preferred to the mean, but it requires a significant amount of processing power. Such a computationally expensive approach may be particularly undesirable for certain applications, such as mobile telephones.

As mentioned above, neighbouring MBs in an image often move in a similar fashion, especially if they belong to the same object. It is therefore reasonable as a general rule to estimate a damaged motion vector with reference to motion vectors for adjacent MBs. However, sometimes the neighbouring blocks may not have similar motion, perhaps because different blocks relate to different objects, moving in different directions. In other words, motion vectors are often not uniform or correlated at or around object boundaries in the image. Thus, an estimation of motion vectors which averages neighbouring motion vectors as described above may give an inaccurate result, with a corresponding reduction in the quality of the displayed image. For example, suppose the top row of MBs relate to an object moving in a first direction and the bottom row of MBs relate to a different object moving in the opposite direction, the average value is approximately zero, whereas the central MB actually relates to the object moving in the first direction.

EP-A-0 645 933 relates to methods for estimating a motion vector for an error block using the mean value of neighbouring motion vectors. In one alternative (cols. 9 and 10), surrounding motion vectors are separated into "more active move data" and "less active move data" depending on the magnitude of the motion vectors and comparison with a threshold. These are averaged. If there are more large move vectors than small, then the large move average is used or vice versa.

Aspects of the invention are set out in the accompanying claims.

In general terms, the invention analyses the distribution of the motion vectors for blocks neighbouring, temporally and/or spatially, a given block to determine the most likely motion vector for the given block. This involves grouping the motion vectors according to similarity. Each group corresponds to different types of motion, for example, different directions of motion or different sizes of motion and may, for example, relate to different objects in the image. The invention involves selecting the largest group, because according to probability, the given block is more likely to have similar motion to the largest group than the smallest group. The motion vectors for other groups are disregarded, because it is assumed they relate to different types of motion and thus are irrelevant to the motion of the selected group. The motion vectors in the selected group are averaged to derive an estimation for the motion vector for the given block.

As a result of the invention, a more accurate indication of a damaged motion vector can be derived, and therefore a better displayed image. The amount of processing required can be relatively small, particularly for certain embodiments.

Embodiments of the invention will be described with reference to the accompanying drawings, of which:

Fig. 1 is an illustration of macroblocks in adjacent frames;

Fig. 2 is an illustration of blocks spatially neighbouring a central block;

Fig. 3 is a motion vector graph showing motion vectors;

Fig. 4 is an illustration of neighbouring blocks;

Fig. 5 is a schematic block diagram of a mobile phone;

Fig. 6 is a flow diagram;

Fig. 7 is a motion vector graph showing groupings in the form of quadrants;

Fig. 8 is a motion vector graph showing another example of motion vectors;

Fig. 9 is an illustration of temporally and spatially neighbouring blocks;

Fig. 10 is a motion vector graph showing another example of groupings;

Fig. 11 is a motion vector graph showing another example of motion vectors;

Fig. 12 is a motion vector graph corresponding to Fig. 11;

Fig. 13 illustrates another example of groupings;

Fig. 14 is a search tree diagram;

Fig. 15 is a diagram, showing another example of groupings;

Fig. 16 is a diagram, showing another example of groupings.

Embodiments of the invention will be described in the context of a mobile videophone in which image data captured by a video camera in a first mobile phone is transmitted to a second mobile phone and displayed.

Fig. 5 schematically illustrates the pertinent parts of a mobile videophone 1. The phone 1 includes a transceiver 2 for transmitting and receiving data, a decoder 4 for decoding received data and a display 6 for displaying received images. The phone also includes a camera 8 for capturing image sequences of the user and an encoder 10 for encoding the captured image sequences.

The decoder 4 includes a data decoder 12 for decoding received data according to the appropriate coding technique, an error detector 14 for detector errors in the decoded data, a motion vector estimator, 16 for estimating damaged motion vectors, and an error concealer 18 for concealing errors according to the output of the motion vector estimator.

A method of decoding received image data for display on the display 6 according to an embodiment of the invention will be described below.

Image data captured by the camera 8 of the first mobile phone is coded for transmission using a suitable known technique using frames, macroblocks and motion compensation, such as an MPEG-4 technique, for example. The coded data is then transmitted.

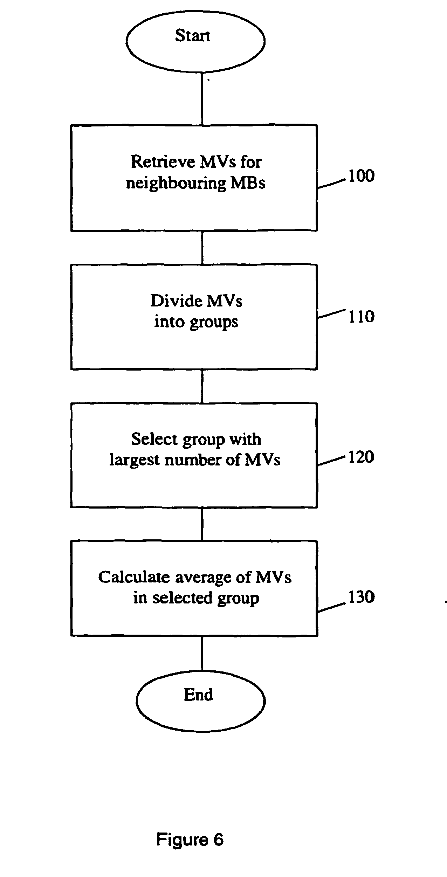

The image data is received by the second mobile phone and decoded by the data decoder 12. As in the prior art, errors occurring in the transmitted data are detected by the error detector 14 and corrected using an error correction scheme where possible. Where it is not possible to correct errors in motion vectors, an estimation method is applied, as described below with reference to the flow chart in Fig. 6, in the motion vector estimator 16.

Suppose an error occurs in data describing a macroblock MB(x,y), this can lead to an error in the motion vector within this macroblock. The motion vectors (MVs) for 6 neighbouring MBs (see Fig. 4) are retrieved (step 100). In Fig. 4, the MBs that are horizontally adjacent to MB(x,y) are excluded, on the assumption that they are also damaged. However, if the horizontally adjacent motion vectors are not damaged, they may be included in the estimation.

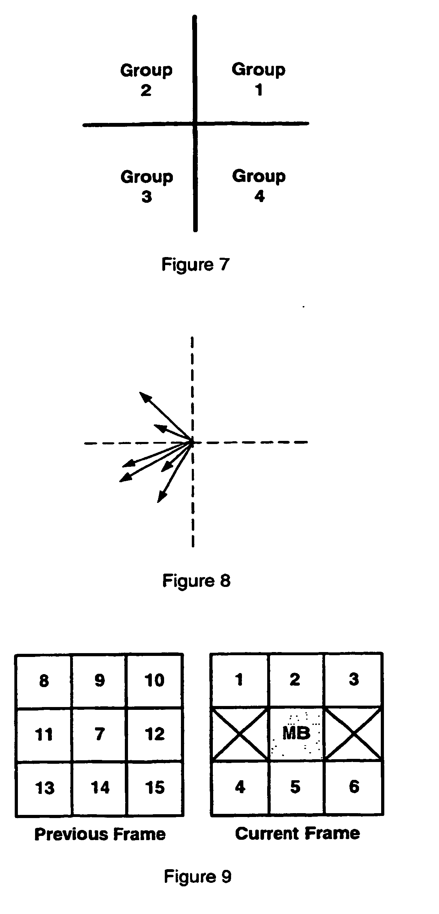

Next, the neighbouring motion vectors are divided into groups (step 110). More specifically, the motion vectors are divided into groups according to the signs of the x and y components, in this embodiment. Fig. 7 illustrates the four groups, which correspond to four quadrants in the x-y plane, the principal axes being the x and y axes. The groups can be described as follows;

By defining a motion vector by $MV_x$ horizontal and $MV_y$ vertical directions:

$$MV = \left( MV_x, MV_y \right)$$

These two horizontal and vertical displacements can have positive and negative directions; hence we can have four groups of motion vectors:

$$Group\ 1 : MV_x \geq 0,\ MV_y \geq 0$$
$$Group\ 2 : MV_x < 0,\ MV_y \geq 0$$
$$Group\ 3 : MY_x < 0,\ MV_y < 0$$
$$Group\ 4 : MV_x \geq 0,\ MV_y < 0$$

Then, the group which contains the largest number of motion vectors is selected (step 120).

Then, an average of the motion vectors in the selected group is calculated, omitting the other motion vectors (step 130). The average may be the median or the mean of the selected group. In this embodiment, the mean is calculated, because it requires less processing power than the median. The mean is calculated using the following formula:

$$V = \frac{1}{M} \sum_{i=1}^{M} V_i$$

Where M out of N motion vectors belong to a group containing the largest number of motion vectors.

Fig. 8 shows an example of 6 motion vectors arising from blocks neighbouring a block with a damaged motion vector. Referring back to Fig. 7, for the motion vectors in Fig. 8, Group 1 (first quadrant) has no motion vectors, Group 2 (second quadrant) has two motion vectors, Group 3 (third quadrant) has four motion vectors and Group 4 (fourth quadrant) has no motion vectors. Group 3 has the largest number of motion vectors and thus is selected as the representative group which is most representative of the motion in the blocks neighbouring the central block MB(x,y). The estimation of the motion vector for the central block MB(x,y) is calculated as the mean of the motion vectors in Group 3, using equation (1) above.

The damaged MB is then replaced with the MB in the preceding frame corresponding to the calculated motion vector. The full image including the replacement MB is finally displayed on the display 6.

A second embodiment of the invention will now be described.

The second embodiment is similar to the first embodiment. However, in the second embodiment, motion vectors from a previous frame are also used in the motion vector estimation. This is particularly useful, for example, when no group has the largest number of motion vectors. This may happen when there are two or more groups of motion vectors for a single frame having the largest number of motion vectors.

Fig. 9 shows a current frame with a central MB and neighbouring blocks numbered 1 to 6. In this embodiment, blocks 7 to 15 from the previous frame are included in the motion estimation. Here, block 7 is the block corresponding spatially to the central block MB in the previous frame, and blocks 8 to 15 are the blocks surrounding block 7 in the previous frame. The motion vectors from the previous frame can be used because they are assumed to be correlated to some extent with those of the current frame. In this embodiment, all the motion vectors for blocks 1 to 6 and blocks 7 to 15 of the preceding frame are grouped, and the group containing the largest number of motion vectors is selected.

In the embodiments described above, the motion vectors are divided into quadrants according to the signs of the x and y components. Zero motion vectors are quite common and therefore in a third embodiment, which is an improvement of the preceding embodiments, an additional group is provided for zero motion vectors, resulting in five groups. An example of possible groupings is set out below.

$$Group\ 0 : MV_x = 0, MV_y = 0$$
$$Group\ 1 : MV_x \geq 0, MV_y > 0$$
$$Group\ 2 : MV_x < 0, MV_y \geq 0$$
$$Group\ 3 : MV_x \leq 0, MV_y < 0$$
$$Group\ 4 : MV_x > 0, MV_y \leq 0$$

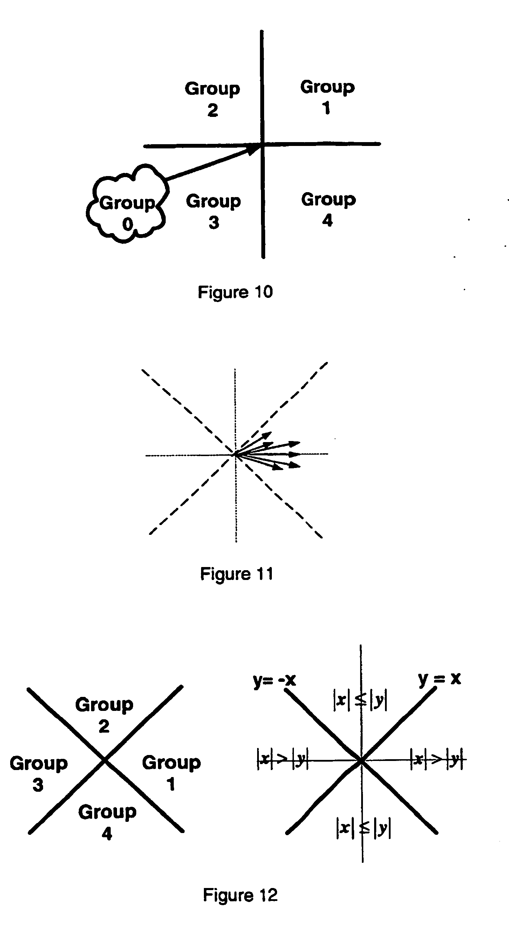

Fig. 10 illustrates the above five groups.

Other groupings can be used by adjusting the equalities and inequalities.

Suppose the motion vectors are centred about one of the x or y axes, as shown in Fig. 10. According to the first embodiment, only the motion vectors in the first quadrant would be used in the averaging. However, this is slightly misleading because the motion vectors in both the first and the fourth quadrant relate to the similar type of motion. The fourth embodiment relates to another type of grouping which overcomes this problem, as shown in Fig. 12. Here, the boundaries of the groups in the motion vector x-y plane are the lines y=x and y=-x. These groups can be described as follows:

$$Group\ 1 : |MV_x| > |MV_y|, MV_x \geq 0$$
$$Group\ 2 : |MV_x| \leq |MV_y|, MV_y > 0$$
$$Group\ 3 : |MV_x| > |MV_y|, MV_x < 0$$
$$Group\ 4 : |MV_x| \leq |MV_y|, MV_y \leq 0$$

Similarly to above, zero motion vectors can be made an additional group.

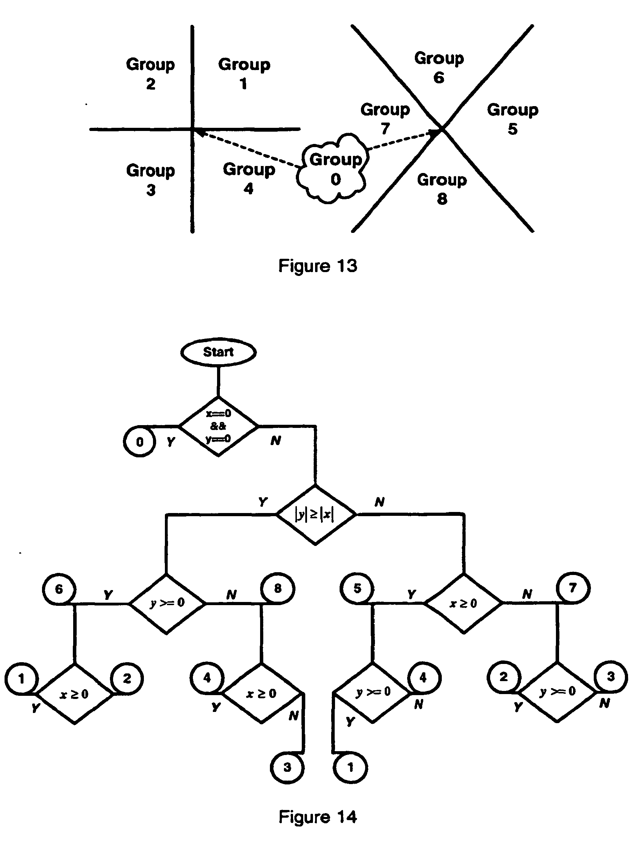

In a fifth embodiment, the groupings of the third embodiment and the fourth embodiment are combined. This produces a generic algorithm as set out below. The groupings are illustrated in Fig. 13.

$$Group\ 0 : MV_x = 0\ MV_y = 0$$
$$Group\ 1 : MV_x \geq 0\ MV_y \geq 0$$
$$Group\ 2 : MV_x < 0\ MV_y \geq 0$$
$$Group\ 3 : MV_x < 0\ MV_y < 0$$
$$Group\ 4 : MV_x \geq 0\ MV_y < 0$$
$$Group\ 5 : |\ MV_y\ |<|\ MV_x\ |\ MV_x \geq 0$$
$$Group\ 6 : |\ MV_y\ |\geq|\ MV_x\ |\ MV_y \geq 0$$
$$Group\ 7 : |MV_y\ |<|\ MV_x\ |\ MV_x < 0$$
$$Group\ 8 : |MV_y\ |\geq|\ MV_x\ |\ MV_y < 0$$

Fig. 14 shows a search tree diagram for putting motion vectors into groups according to the fifth embodiment.

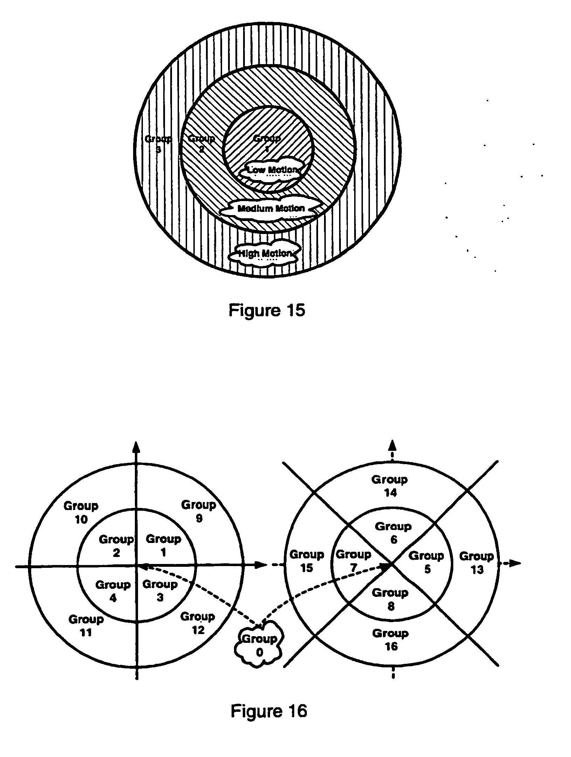

In the above embodiments, the motion vectors are grouped according to their direction. In a sixth embodiment, the motion vectors are grouped according to size (that is absolute value of the motion vector). Fig. 15 illustrates groups of motion vectors according to size, according to low motion, medium motion and high motion. The motion vectors are grouped by calculating the absolute value and comparing it with threshold values which define the boundaries of the groups. The group with the largest number of members is selected, and it is assumed that the damaged motion vector has a similar size. More specifically, the members of the selected group are averaged (eg mean or median) to obtain an estimated size. The direction of the motion vector is estimated separately and then adjusted to have the estimated size.

A seventh embodiment combines the fifth and the sixth embodiments, to group the motion vectors according to both size and direction. Fig. 16 illustrates the combination. As shown, there are seventeen possible groups dependent on the direction of the motion vector and its size. Here, there are only two possible sizes of motion vectors, although any number of sizes are possible.

The description of the second to the seventh embodiments show how a group of motion vectors are selected. The other steps of the method are as for the first embodiment.

In the embodiments described above, the groups are defined by fixed boundaries, such as the x and y axes in the x and y plane. Alternatively, a boundary of a predetermined shape and size could be moved until it bounds the largest number of motion vectors. For example, referring to Fig. 7, a quadrant shaped area could be rotated successively by a fixed number of degrees, eg 45°, each time counting the number of motion vectors within the boundary of the area, until it returns to the original position, or with just a certain number of rotations. The largest group of motion vectors for one position of the quadrant-shaped area is used to estimate the motion vector. Similarly, for the size, instead of using fixed thresholds, the width of the grouping may be fixed, with the thresholds movable to detect the group containing the largest number of motion vectors.

The motion vectors can be grouped according to other boundaries, for example, describing smaller or larger areas. For example, each boundary could define half a quadrant or two quadrants. However, experience and tests have shown that quadrants provide good solutions without too much complexity. Similarly, the combination of fixed quadrants as in the fifth embodiment produces good results with less complexity than rotating a quadrant. A quadrant is a good compromise because it is large enough to contain motion vectors considered to relate to the same type of motion but small enough to exclude motion vectors relating to other types of motion. For example, two quadrants could include a first group of vectors pointing at 45°, and a second group pointing at 135°, which clearly relate to different types of motion.

The specific embodiments provide simple low processing analysis for excluding motion that relates to a different object or to a fluke motion vector either of which reduces accuracy of estimation.

**Claims**

1. A method of approximating a motion vector for an image block, the method comprising retrieving motion vectors for neighbouring blocks, **characterised by** identifying a predominant value of direction of motion vectors for the neighbouring blocks, selecting those motion vectors for the neighbouring blocks which have a direction which is the same or similar to said predominant value to form a group, and deriving an approximation for the motion vector for the image block from the selected group of motion vectors.

2. A method as claimed in claim 1 wherein the similarity of a motion vector to a predominant value is measured using a distance function, and motion vectors are selected by comparing the value of the distance function with a predetermined threshold.

3. A method of approximating a motion vector for an image block, the method being **characterised by** dividing motion vectors for neighbouring blocks into groups according to direction of the motion vectors, identifying and selecting the group having the largest number of members and deriving an approximation for the motion vector for the image block from said group of motion vectors.

4. A method as claimed in any one of claims 1 to 3, 5 or 6 wherein the motion vectors are group on the basis of a combination of direction and size.

5. A method as claimed in any one preceding claim wherein the selected group of motion vectors are averaged to derive an approximation for the image block.

6. A method as claimed in claim 5 wherein the average is the mean value of the selected group of motion vectors.

7. A method as claimed in claim 5 wherein the average is the mean value of the selected group of motion vectors.

8. A method as claimed in any preceding claim wherein the neighbouring blocks include at least one block from the same frame.

9. A method as claimed in any preceding claim wherein the neighbouring blocks include at least one block from a different frame.

10. A method as claimed in any preceding claim wherein the motion vectors are grouped by comparing the size of the motion vector with at least one predetermined value.

11. A method as claimed in any preceding claim wherein the motion vectors are grouped by comparing the directions of the motion vectors with at least one predetermined direction.

12. A method as claimed in any preceding claim wherein the motion vectors are grouped by comparing their size and direction with a combination of at least one predetermined value and direction.

13. A method as claimed in any preceding claim wherein the motion vectors are grouped into quadrants in a motion vector graph.

14. A method as claimed in claim 11 wherein the boundaries of the quadrant corresponds to the principal axes.

15. A method as claimed in claim 12 or claim 13 wherein the boundaries of the quadrants are different from the principal axes.

16. A method as claimed in claim 15 wherein the boundaries of the quadrant are at approximately 45° to the principal axes.

17. A method as claimed in any preceding claim wherein one group corresponds to a zero motion vector.

18. A computer program for executing all steps of a method as claimed in any preceding claim.

19. A data storage medium storing a computer program as claimed in claim 18.

20. Apparatus comprising means for performing all steps of a method as claimed in any of claims 1 to 17.

21. Apparatus as claimed in claim 20 comprising a data decoding means (12), error detecting means (14), a motion vector estimator (16) and error concealing means (18).

22. A receiver for a communication system comprising an apparatus as claimed in claim 20 or claim 21.

23. A receiver as claimed in claim 22 which is a mobile telephone.

**Patentansprüche**

1. Verfahren zum näherungsweisen Berechnen eines Bewegungsvektors für einen Bildblock, wobei das Verfahren das Abrufen von Bewegungsvektoren für benachbarte Böcke umfasst, **gekennzeichnet durch** Identifizieren eines vorherrschenden Werts der Richtung des Bewegungsvektors für die benachbarten Blöcke, Auswählen jener Bewegungsvektoren für die benachbarten Blöcke, welche eine Richtung aufweisen, die gleich oder ähnlich dem vorherrschenden Wert ist, um eine Gruppe auszubilden, und Ableiten einer Annäherung für den Bewegungsvektor für den Bildblock von der ausgewählten Gruppe der Bewegungsvektoren.

2. Verfahren nach Anspruch 1, wobei die Ähnlichkeit eines Bewegungsvektors zu einem vorherrschenden Wert unter Verwendung einer Abstandsfunktion gemessen wird und die Bewegungsvektoren durch Vergleichen des Werts der Abstandsfunktion mit einem vorbestimmten Schwellenwert ausgewählt werden.

3. Verfahren zum näherungsweisen Berechnen eines Bewegungsvektors für einen Bildblock, wobei das Verfahren **gekennzeichnet ist durch** Teilen der Bewegungsvektoren für benachbarte Blöcke in Gruppen gemäß der Richtung der Bewegungsvektoren, **durch** Identifizieren und Auswählen der Gruppe, welche die größte Anzahl an Elementen aufweist, und Ableiten einer Annäherung für den Bewegungsvektor für den Bildblock von der ausgewählten Gruppe der Bewegungsvektoren.

4. Verfahren nach einem der Ansprüche 1 bis 3, 5 oder 6, wobei die Bewegungsvektoren eine Gruppe auf der Grundlage einer Kombination von Richtung und Größe bilden.

5. Verfahren nach einem der vorangehenden Ansprüche, wobei die ausgewählte Gruppe Bewegungsvektoren gemittelt sind, um eine Näherung des Bildblocks abzuleiten.

6. Verfahren nach Anspruch 5, wobei der Durchschnitt der Mittelwert der ausgewählten Gruppe von Bewegungsvektoren ist.

7. Verfahren nach Anspruch 5, wobei der Durchschnitt der Mittelwert der ausgewählten Gruppe von Bewegungsvektoren ist.

8. Verfahren nach einem der vorangehenden Ansprüche, wobei die benachbarten Blöcke wenigstens einen Block aus demselben Einzelbild umfassen.

9. Verfahren nach einem der vorangehenden Ansprüche, wobei die benachbarten Blöcke wenigstens einen Block aus einem unterschiedlichen Einzelbild umfassen.

10. Verfahren nach einem der vorangehenden Ansprüche, wobei die Bewegungsvektoren durch Vergleichen der Größe des Bewegungsvektors mit wenigstens einem vorbestimmten Wert gruppiert sind.

11. Verfahren nach einem der vorangehenden Ansprüche, wobei die Bewegungsvektoren durch Vergleichen der Richtungen der Bewegungsvektoren mit wenigstens einer vorbestimmten Richtung gruppiert sind.

12. Verfahren nach einem der vorangehenden Ansprüche, wobei die Bewegungsvektoren durch Vergleichen ihrer Größe und Richtung mit einer Kombination von wenigstens einem vorbestimmten Wert und einer vorbestimmten Richtung gruppiert sind.

13. Verfahren nach einem der vorangehenden Ansprüche, wobei die Bewegungsvektoren in Quadranten in einem Bewegungsvektorgraph gruppiert sind.

**14.** Verfahren nach Anspruch 11, wobei die Grenzen des Quadranten den Hauptachsen entsprechen.

**15.** Verfahren nach Anspruch 12 oder Anspruch 13, wobei die Grenzen der Quadranten unterschiedlich zu den Hauptachsen sind.

**16.** Verfahren nach Anspruch 15, wobei die Grenzen des Quadranten in ungefähr 45° zu den Hauptachsen liegen.

**17.** Verfahren nach einem der vorangehenden Ansprüche, wobei eine Gruppe einem Nullbewegungsvektor entspricht.

**18.** Computerprogramm zum Ausführen aller Schritte eines Verfahrens nach einem der vorangehenden Ansprüche.

**19.** Datenspeichermedium, welches ein Computerprogramm nach dem Anspruch 18 speichert.

**20.** Vorrichtung, umfassend Mittel zum Durchführen aller Schritte eines Verfahrens gemäß einem der Ansprüche 1 bis 17.

**21.** Vorrichtung nach Anspruch 20, umfassend ein Datendecodiermittel (12), Fehlererkennungsmittel (14), ein Bewegungsvektorschätzfunktionsmittel (16) und Fehlerverschleierungsmittel (18).

**22.** Empfänger für ein Kommunikationssystem, umfassend eine Vorrichtung nach Anspruch 20 oder Anspruch 21.

**23.** Empfänger nach Anspruch 22, welcher ein Mobiltelefon ist.


## Revendications

**1.** Procédé pour approcher un vecteur mouvement pour un bloc d'image, le procédé comprenant la récupération des vecteurs mouvement pour des blocs voisins, **caractérisé par** l'identification d'une valeur prédominante de direction de vecteurs mouvement pour les blocs voisins, la sélection des vecteurs mouvement pour les blocs voisins dont la direction est identique ou similaire à ladite valeur prédominante pour former un groupe, et la dérivation d'une approximation pour le vecteur mouvement pour le bloc d'image à partir du groupe de vecteurs mouvement sélectionné.

**2.** Procédé selon la revendication 1, dans lequel la similarité d'un vecteur mouvement avec une valeur prédominante est mesurée en utilisant une fonction de distance, et les vecteurs mouvement sont sélectionnés en comparant la valeur de la fonction de distance avec un seuil prédéterminé.

**3.** Procédé pour approcher un vecteur mouvement pour un bloc d'image, le procédé étant **caractérisé par** la division de vecteurs mouvement pour des blocs voisins en groupes selon la direction des vecteurs mouvement, l'identification et la sélection du groupe présentant le plus grand nombre d'éléments et la dérivation d'une approximation pour le vecteur mouvement pour le bloc d'image à partir dudit groupe de vecteurs mouvement.

**4.** Procédé selon l'une quelconque des revendications 1 à 3, 5 ou 6 dans lequel les vecteurs mouvement sont groupés sur la base d'une combinaison de direction et de grandeur.

**5.** Procédé selon l'une quelconque des revendications précédentes, dans lequel on calcule la moyenne du groupe de vecteurs mouvement sélectionné pour dériver une approximation pour le bloc d'image.

**6.** Procédé selon la revendication 5, dans lequel la moyenne est la valeur moyenne du groupe de vecteurs mouvement sélectionné.

**7.** Procédé selon la revendication 5, dans lequel la moyenne est la valeur moyenne du groupe de vecteurs mouvement sélectionné.

**8.** Procédé selon l'une quelconque des revendications précédentes, dans lequel les blocs voisins comprennent au moins un bloc provenant de la même image.

**9.** Procédé selon l'une quelconque des revendications précédentes, dans lequel les blocs voisins comprennent au moins un bloc provenant d'une image différente.

**10.** Procédé selon l'une quelconque des revendications précédentes, dans lequel les vecteurs mouvement sont groupés en comparant la grandeur du vecteur mouvement avec au moins une valeur prédéterminée.

**11.** Procédé selon l'une quelconque des revendications précédentes, dans lequel les vecteurs mouvement sont groupés en comparant les directions des vecteurs mouvement avec au moins une direction prédéterminée.

**12.** Procédé selon l'une quelconque des revendications précédentes, dans lequel les vecteurs mouvement sont groupés en comparant leur grandeur et leur direction avec une combinaison d'au moins une valeur et une direction prédéterminées.

**13.** Procédé selon l'une quelconque des revendications précédentes, dans lequel les vecteurs mouvement sont groupés en quadrants dans un graphique de vecteurs mouvement.

**14.** Procédé selon la revendication 11, dans lequel les frontières des quadrants correspondent aux axes principaux.

**15.** Procédé selon la revendication 12 ou la revendication 13, dans lequel les frontières des quadrants sont diffèrent des axes principaux.

**16.** Procédé selon la revendication 15, dans lequel les frontières des quadrants sont situées à approximativement 45° des axes principaux.

**17.** Procédé selon l'une quelconque des revendications précédentes, dans lequel un groupe correspond à un vecteur mouvement nul.

**18.** Programme informatique pour exécuter toutes les étapes du procédé selon l'une quelconque des revendications précédentes.

**19.** Support de stockage de données stockant un programme informatique selon la revendication 18.

**20.** Appareil comprenant des moyens pour effectuer toutes les étapes du procédé selon l'une quelconque des revendications 1 à 17.

**21.** Appareil selon la revendication 20, comprenant des moyens de décodage de données (12), des moyens de détection d'erreur (14), un estimateur de vecteur mouvement (16) et des moyens de dissimulation d'erreur (18).

**22.** Récepteur pour un système de communication comprenant un appareil selon la revendication 20 ou la revendication 21.

**23.** Récepteur selon la revendication 22 qui est un téléphone mobile.

Previous Frame   Current Frame

Figure 1

| 1 | 2 | 3 |
|---|----|---|
| 4 | MB | 5 |
| 6 | 7 | 8 |

Figure 2

Figure 3

| MB(x-1,y-1) | MB(x,y-1) | MB(x-1,y-1) |
| MB(x,y) | |
| MB(x-1,y+1) | MB(x,y+1) | MB(x+1,y+1) |

Figure 4

1

10  Encoder        8  Camera

2  Transceiver

4

| Data decoder 12 | Error detector 14 | MV estimator 16 | Error concealor 18 |

6  Display

Figure 5

Figure 6

| Group 2 | Group 1 |
|---------|---------|
| Group 3 | Group 4 |

Figure 7

Figure 8

| 8 | 9 | 10 |
|---|---|----|
| 11 | 7 | 12 |
| 13 | 14 | 15 |

Previous Frame

| 1 | 2 | 3 |
|---|---|---|
|   | MB |  |
| 4 | 5 | 6 |

Current Frame

Figure 9

Figure 10

Figure 11

Figure 12

Figure 13

Figure 14

Figure 15

Figure 16